(19)

**Europäisches Patentamt**
**European Patent Office**
**Office européen des brevets**

(11)  **EP 3 224 553 B1**

(12)  # FASCICULE DE BREVET EUROPEEN

(45) Date de publication et mention
de la délivrance du brevet:
**27.05.2020 Bulletin 2020/22**

(21) Numéro de dépôt: **15794514.8**

(22) Date de dépôt: **06.11.2015**

(51) Int Cl.:
*F25B 30/04* ^(2006.01)       *F25B 49/04* ^(2006.01)

(86) Numéro de dépôt international:
**PCT/EP2015/075920**

(87) Numéro de publication internationale:
**WO 2016/083097 (02.06.2016 Gazette 2016/22)**

(54) **UN SYSTÈME COMPORTANT UNE MACHINE À ABSORPTION ET UN CIRCUIT DE COMMANDE**

EIN SYSTEM, DAS EINE ABSORPTIONSMASCHINE UND EINE STEUERSCHALTUNG UMFASST

A SYSTEM COMPRISING AN ABSORPTION MACHINE AND A CONTROL CIRCUIT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.11.2014 FR 1461412**

(43) Date de publication de la demande:
**04.10.2017 Bulletin 2017/40**

(73) Titulaire: **Commissariat à l'Énergie Atomique
et aux Énergies Alternatives
75015 Paris (FR)**

(72) Inventeur: **BONNOT, Sylvain
F-73000 Chambéry (FR)**

(74) Mandataire: **Cabinet Laurent & Charras
Le Contemporain
50 Chemin de la Bruyère
69574 Dardilly Cedex (FR)**

(56) Documents cités:
**WO-A1-82/03265      US-A- 4 164 128**

• **J. FERNÀNDEZ-SEARA, M. VÀZQUEZ: "Study
and control of the optimal generation
temperature in NH3-H2O absorption refrigeration
systems", APPLIED THERMAL ENGINEERING, 1
février 2001 (2001-02-01), pages 343-357,
XP002742736, ISSN: 1359-4311, DOI:
10.1016/S1359-4311(00)00047-8 Extrait de
l'Internet:
URL:http://ac.els-cdn.com/S135943110000047
8/1-s2.0-S1359431100000478-main.pdf?_tid=6
353d2be-343d-11e5-af79-00000aacb35f&acdnat
=1437987577_e1b7c609e67dd1a16ec07a716667
e3 bc [extrait le 2015-07-27] cité dans la demande**

**Description**

**DOMAINE DE L'INVENTION**

La présente invention concerne le domaine des machines à absorption, et plus particulièrement la commande de celles-ci.

**ETAT DE LA TECHNIQUE**

Une pompe à chaleur est un dispositif thermodynamique permettant de transférer de la chaleur depuis un milieu à basse température, vers un milieu à une température supérieure. La pompe peut fonctionner en tant que machine frigorifique si l'objectif est de refroidir le milieu à basse température, par exemple un réfrigérateur ou une unité de climatisation, ou en tant que système de chauffage si l'objectif est de réchauffer le milieu à plus haute température, par exemple une pompe à chaleur pour le chauffage domestique. Le principe de fonctionnement d'une pompe à chaleur repose sur le changement d'état à différentes pressions (évaporation et condensation) d'un fluide frigorigène circulant entre le milieu le plus froid et le milieu plus chaud. Ce fluide frigorigène est mis en mouvement et comprimé à l'état de vapeur par un compresseur.

Une machine à absorption est une pompe à chaleur où la fonction du compresseur est réalisée par un cycle thermodynamique moteur utilisant une source de chaleur à plus haute température, par exemple issue de capteurs solaires thermiques, ou d'un brûleur à gaz. Ce cycle moteur utilise une pompe (système aspirant et refoulant à plus haute pression un liquide) pour réaliser la compression et la mise en mouvement du fluide. La compression à l'état liquide par une pompe consomme beaucoup moins d'énergie que la compression à l'état vapeur On parlera de source froide pour le milieu à basse température qui se refroidit, de source intermédiaire pour le milieu à température moyenne qui se réchauffe, et de source chaude pour l'énergie à haute température utilisée pour la fonction de compression.

L'intérêt de la machine à absorption est d'avoir une consommation d'électricité beaucoup plus faible qu'une pompe à chaleur à compression de vapeur. En effet, la machine à absorption consomme, à la place d'une puissance électrique alimentant le compresseur, une puissance électrique faible pour la pompe ainsi qu'une puissance thermique fournie par une source de chaleur à haute température (55-200°C) qui peut être issue d'énergies renouvelables, ou de chaleur fatale issue de procédés industriels. Cette source de chaleur peut ainsi être de l'énergie solaire, de la cogénération, de la biomasse, de la géothermie...

Un des enjeux concernant les machines à absorption est de parvenir à des performances similaires à celles des pompes à chaleur à compression électrique en termes de performance énergétique et de régulation de la puissance utile qu'elles délivrent. Notamment, l'ajout d'une source chaude complexifie grandement le cycle thermodynamique du fluide frigorigène et multiplie les paramètres influençant ces performances.

Ainsi, les machines à absorption usuellement commercialisées ne disposent pas de système de régulation de leur puissance utile. Tout au plus, la commande de la puissance utile d'une machine à absorption se fait par une technique du « tout ou rien », c'est-à-dire en alternant les cycles de fonctionnement et d'arrêt de la machine. En raison des temps de démarrage et de stabilisation longs, une telle commande consomme beaucoup d'énergie, ce qui induit une faible performance énergétique. En outre, une telle commande ne permet pas d'ajuster correctement la puissance de la machine sur la puissance demandée par l'utilisateur. Par exemple pour une machine fonctionnant en tant que chauffage domestique, la température d'une pièce chauffée par la machine varie fortement autour de la température demandée par l'utilisateur. Pour pallier ces problèmes, différentes commandes pour une machine à absorption ont été étudiées.

Par exemple, le document de J. Fernandez Seara et al. (« Study and control of the optimal génération temperature in NH3-H2O absorption réfrigération systems », Applied Thermal Engineering 21, p343-357, 2001) décrit une commande de la température du générateur de la machine à absorption pour ajuster le coefficient $COP_{th}$ de performance thermique de la machine. Toutefois, cette commande ne permet pas de contrôler de manière correcte la puissance utile fournie par la machine. Le document de J. Labus et al. (« Inverse neural network based control strategy for absorption chillers ». Renewable Energy», n° 39, p471-482, 2012) décrit quant à lui une commande de la puissance frigorifique d'une machine à absorption par variation de la température au générateur et/ou du débit et de la température à l'évaporateur. Toutefois, cette commande induit une performance énergétique dégradée.

Le document WO 82/03265 A1 dévoile un système selon le préambule des revendications indépendantes 1 et 5.

De manière générale, les différentes commandes de l'état de la technique permettent soit de commander le coefficient de performance thermique, mais sans pouvoir commander la puissance utile fournie, soit de commander la puissance utile, mais avec une machine à absorption qui fonctionne avec une performance énergétique dégradée.

**EXPOSE DE L'INVENTION**

Le but de la présente invention est de résoudre le problème susmentionné en proposant une machine à absorption commandée, dont la commande permet de contrôler la performance de la machine et permet de fournir la puissance utile demandée par l'utilisateur.

A cet effet l'invention a pour objet un système selon la revendication 1, le système comprenant une machine à absorption et un circuit de commande couplé à la machine à absorption pour réguler la puissance utile $Q_u$ de celle-ci sur une puissance utile demandée $Q_u^d$ prédéterminée, la machine à absorption comportant :

- un évaporateur, de température $T_e$ et apte à échanger une puissance thermique $Q_e$ avec son environnement ;
- un ensemble absorbeur/condenseur formé d'un absorbeur et d'un condenseur, de température $T_{ac}$ et apte à échanger une puissance thermique $Q_{ac}$ avec son environnement ;
- un générateur, de température $T_g$ et apte à échanger une puissance thermique $Q_g$, la puissance thermique $Q_g$ étant pilotable par la température $T_g$; et
- une pompe rotative à solution, disposée entre l'absorbeur et le générateur et dont la vitesse de rotation $N_{pompe}$ est pilotable;

Selon l'invention, le circuit de commande comporte :
- un capteur apte à produire une mesure $T_e^m$ de la température $T_e$ de l'évaporateur et un capteur apte à produire une mesure $T_{ac}^m$ de la température $T_{ac}$ de l'ensemble absorbeur/condenseur ;
- une unité de calcul apte à calculer une consigne $T_g^c$ pour la température $T_g$ du générateur et une consigne $N_{pompe}^c$ pour la vitesse de rotation $N_{pompe}$ de la pompe rotative à solution en fonction de puissance utile demandée $Q_u^d$, et des mesures de température $T_e^m$ et $T_{ac}^m$ de manière à satisfaire la relation :

$$(COP_{th}^{max}, Q_u^d) = f_{abso}(T_e^m, T_{ac}^m, T_g^c, N_{pompe}^c)$$

expression dans laquelle $COP_{th}^{max}$ est une valeur souhaitée d'un coefficient de performance $COP_{th}$ de la machine à absorption, et $f_{abso}$ est un modèle de la machine à absorption prédisant le coefficient $COP_{th}$ et la puissance utile $Q_u$ en fonction des températures $T_e$, $T_{ac}$ et $T_g$ et de la vitesse de rotation $N_{pompe}$ ;

- et un circuit de contrôle pour appliquer la consigne de vitesse $N_{pompe}^c$ à la pompe rotative à solution et pour appliquer la consigne de température $T_g^c$ au générateur.

En d'autres termes, en commandant conjointement la vitesse de la pompe rotative à solution et la température du générateur, et uniquement ces deux grandeurs, il est possible de contrôler, notamment d'optimiser, les performances énergétiques de la machine à absorption tout en commandant correctement la puissance utile que celle-ci délivre. Notamment, le coefficient est le coefficient de performance thermique dont il est possible de commander la valeur grâce à l'invention, par exemple maximiser celle-ci. Par ailleurs, la température de l'évaporateur, et la température de l'ensemble absorbeur/condenseur, qui sont usuellement des paramètres fixés par l'environnement de la machine, sont également directement pris en compte. En mettant à jour les consignes sur la vitesse de rotation de la pompe et sur la température du générateur, il est possible de rejeter les perturbations induites par une variation de ces températures depuis le dernier calcul des consignes.

Selon un mode de réalisation, l'unité de calcul comporte :

- une mémoire mémorisant le modèle $f_{abso}$ selon la relation :

$$(COP_{th}, Q_u) = f_{abso}(T_e, T_{ac}, T_g, N_{pompe})$$

- et un circuit de calcul apte à rechercher les consignes de valeurs $T_g^c$ et $N_{pompe}^c$ en posant dans le modèle $T_e = T_e^m$ et $T_{ac} = T_{ac}^m$ et en faisant varier les variables du modèle $T_g$ et $N_{pompe}$ jusqu'à obtenir le couple de sorties du modèle $(COP_{th}, Q_u) = (COP_{th}^{max}, Q_u^d)$.

En d'autres termes, le circuit de commande embarque un modèle et utilise directement ce dernier pour le calcul des consignes, ce qui permet une commande plus précise.

Selon un mode de réalisation, l'unité de calcul comporte :

- une mémoire mémorisant des couples $\begin{pmatrix} T_g^c \\ N_{pompe}^c \end{pmatrix}$ de consignes $T_g^c$ de température pour le générateur et de consigne $N_{pompe}^c$ de vitesse de rotation pour la pompe rotative à solution en fonction de triplets $\begin{pmatrix} T_e \\ T_{ac} \\ Q_u \end{pmatrix}$ de

température de l'évaporateur $T_e$, de température de l'ensemble absorbeur/condenseur $T_{ac}$ et de puissance utile $Q_u$; et

- un circuit de calcul apte à sélectionner un couple de consigne $\begin{pmatrix} T_g^c \\ N_{pompe}^c \end{pmatrix}$ parmi les couples de consignes mémorisés en fonction du triplet $\begin{pmatrix} T_e^m \\ T_{ac}^m \\ Q_u^d \end{pmatrix}$.

En d'autres termes, le circuit de commande embarque des cartographies, tables ou abaques se fondant sur le modèle de prédiction, ce qui permet un calcul plus rapide des consignes.

Selon un mode de réalisation, le circuit de commande comporte un capteur apte à produire une mesure $T_g^m$ de la température $T_g$ du générateur, et le circuit de contrôle comporte un régulateur apte à commander la température $T_g$ du générateur de manière à réguler la mesure de température $T_g^m$ sur la consigne de température $T_g^c$.

En d'autres termes, une régulation de la température du générateur est mise en œuvre. Ceci permet de rejeter les perturbations sur la machine, notamment sur la température de l'évaporateur et la température de l'ensemble absorbeur/condenseur, entre deux instants de calcul des consignes sur la vitesse de rotation de la pompe et la température du générateur.

L'invention a également pour objet un système selon la revendication 5, le système comprenant une machine à absorption et un circuit de commande couplé à la machine à absorption pour réguler la puissance utile $Q_u$ de celle-ci sur une puissance utile demandée $Q_u^d$ prédéterminée, la machine à absorption comportant :

- un évaporateur, de température $T_e$ et apte à échanger une puissance thermique $Q_e$ avec son environnement ;
- un ensemble absorbeur/condenseur formé d'un absorbeur et d'un condenseur, de température $T_{ac}$ et apte à échanger une puissance thermique $Q_{ac}$ avec son environnement ;
- un générateur, de température $T_g$ et apte à échanger une puissance thermique $Q_g$, la puissance thermique $Q_g$ étant pilotable par la température $T_g$; et
- une pompe rotative à solution, disposée entre l'absorbeur et le générateur et dont la vitesse de rotation $N_{pompe}$ est pilotable.

Selon l'invention, le circuit de commande comporte :

- un capteur apte à produire une mesure $T_e^m$ de la température $T_e$ de l'évaporateur et un capteur apte à produire une mesure $T_{ac}^m$ de la température $T_{ac}$ de l'ensemble absorbeur/condenseur ;
- une unité de calcul apte à calculer une consigne $T_g^c$ pour la température $T_g$ du générateur et une consigne $N_{pompe}^c$ pour la vitesse de rotation $N_{pompe}$ de la pompe rotative à solution en fonction de puissance utile demandée $Q_u^d$, et des mesures de température $T_e^m$ et $T_{ac}^m$;
- et un circuit de contrôle pour appliquer la consigne de vitesse $N_{pompe}^c$ à la pompe rotative à solution et pour appliquer la consigne de température $T_g^c$ au générateur.

En outre, le calcul mis en œuvre par l'unité de calcul (46) est sélectionné de manière à ce que :

- l'application des consignes $N_{pompe}^c$ et $T_g^c$ pour une température $T_e = T_e^m$ et une température $T_{ac} = T_{ac}^m$ $T_{ac}$ conduit, en régime permanent, à une puissance utile $Q_u$ de la machine à absorption égale à la puissance utile demandée $Q_u^d$ et à une valeur $COP_{th}^{max}$ du coefficient de performance thermique $COP_{th}$ de la machine à absorption; et

- à partir du régime permanent établi pour une valeur $\begin{pmatrix} T_e^m \\ T_{ac}^m \\ T_g^c \\ N_{pompe}^c \end{pmatrix}$ du vecteur $P_F = \begin{pmatrix} T_e \\ T_{ac} \\ T_g \\ N_{pompe} \end{pmatrix}$, une variation vecteur $P_F$ entraine, une fois un régime permanent atteint et pour une puissance utile $Q_u$ gardée constante et égale à $Q_u^d$, une valeur du coefficient de performance thermique $COP_{th}$ de la machine à absorption inférieur ou égal à la valeur $COP_{th}^{max}$.

## BREVE DESCRIPTION DES FIGURES

L'invention sera mieux comprise à la lecture de la description qui va suivre, donnée uniquement à titre d'exemple, et faite en relation avec les dessins annexés dans lesquels :

- la figure 1 est une schématique d'une machine à absorption selon l'invention ;
- la figure 2 est une vue schématique d'un circuit de commande selon l'invention de la machine à absorption ;
- la figure 3 est une vue illustrant un algorithme de calcul selon l'invention de consignes de température de générateur et de vitesse de rotation de pompe rotative à solution ; et
- les figures 4A et 4B sont des tracés de puissance utile et de coefficient de performance thermique en fonction de la température du générateur et de la vitesse de rotation de la pompe rotative à solution de la machine à absorption.

## DESCRIPTION DETAILLEE DE L'INVENTION

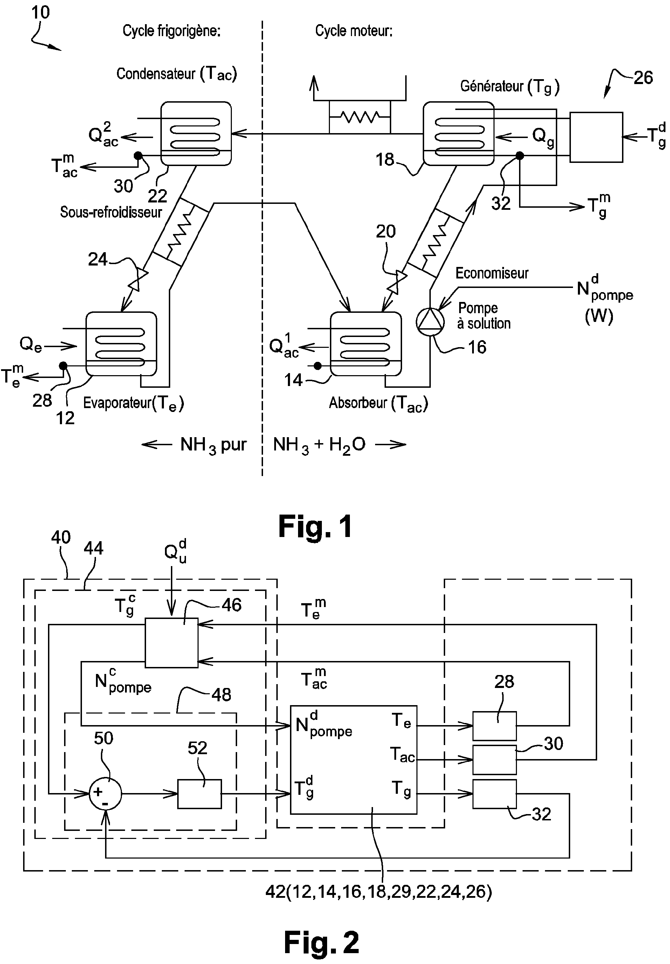

La figure 1 représente de manière schématique un exemple de machine à absorption **10,** dont les éléments décrits ci-après sont disposés en fonction du cycle thermodynamique du fluide frigorigène. En pratique, l'absorbeur et le condenseur échangent avec le même fluide de manière parallèle ou en série, et ont la même température en régime permanent.

La machine à absorption **10** comporte :

a. un évaporateur **12.** L'évaporateur **12** reçoit un fluide frigorigène liquide à basse pression, par exemple de l'ammoniac ($NH_3$), et évapore celui-ci en prélevant une puissance thermique $Q_e$ à son environnement (usuellement appelé « source froide ») qui présente une température $T_e$. L'évaporateur **12** produit ainsi une vapeur de fluide frigorigène à basse pression.

b. un absorbeur **14.** L'absorbeur **14,** qui reçoit la vapeur de fluide frigorigène produite par l'évaporateur **12,** contient une solution comportant un absorbant du fluide frigorigène, par exemple de l'eau ($H_2O$) pour l'ammoniac. La vapeur de fluide frigorigène est alors absorbée par cette solution en rejetant une puissance $Q_{ac}^1$ vers son environnement (usuellement appelé « source intermédiaire ») qui présente une température $T_{ac} > T_e$. L'absorbeur **14** produit ainsi une solution d'absorbant enrichie en fluide frigorigène à basse pression;

c. une pompe électrique **16,** appelée « pompe à solution » **16,** qui pompe la solution enrichie de l'absorbeur **14** tout en la compressant à haute pression;

d. un générateur **18,** disposé en sortie de la pompe **16.** Le générateur **18** reçoit la solution enrichie à haute pression et chauffe cette dernière à une température $T_g > T_{ac}$ en prélevant une puissance thermique $Q_g$ à son environnement (usuellement appelée « source chaude »), ce qui a pour effet d'évaporer le fluide frigorigène contenu dans la solution enrichie. Le générateur **18** génère ainsi une solution d'absorbant appauvrie en fluide frigorigène et une vapeur de fluide frigorigène, cette solution et cette vapeur étant à haute pression;

e. un détendeur **20.** Le détendeur **20** reçoit de l'absorbeur **18** la solution appauvrie à haute pression, détend celle-ci pour l'amener à la pression de la solution contenue dans l'absorbeur **14** et fournit la solution détendue à ce dernier ;

f. un condenseur **22.** Le condenseur **22** reçoit de l'absorbeur **18** la vapeur de fluide frigorigène à haute pression et la condense en rejetant une puissance thermique $Q_{ac}^2$, , à la source intermédiaire. Le condenseur **22** génère ainsi un fluide frigorigène liquide à haute pression; et

g. un détendeur **24.** Le détendeur **24** reçoit le fluide frigorigène liquide du condenseur **22** et le détend jusqu'à la pression de l'évaporateur **12** auquel il fournit le fluide détendu.

Les éléments décrits ci-dessus sont classiques et ne seront pas détaillés plus en détail par la suite. Ils forment ensemble les éléments minimaux constitutifs d'une machine à absorption, des éléments supplémentaires pouvant être ajoutés (rectifieur, économiseur, sous refroidisseur...) pour améliorer le fonctionnement de la machine, dans le cadre de l'invention telle que définie dans les revendications.

Comme cela est connu en soit, l'évaporateur **12,** le condenseur **22** et le détendeur **24** mettent conjointement en œuvre le cycle dit « frigorigène ». Par le changement d'état que subit le fluide frigorigène, le cycle frigorigène prélève de la chaleur au moyen de l'évaporateur et fournit de la chaleur au moyen du condenseur et de l'absorbeur. Lorsque la machine à absorption est utilisée en tant qu'unité de réfrigération, l'évaporateur est alors disposé dans la pièce que l'on souhaite refroidir. La puissance utile $Q_u$ de la machine est alors la puissance thermique $Q_e$ de l'évaporateur. Lorsque la machine à absorption est utilisée en tant que chauffage, le condenseur et l'absorbeur sont alors disposés dans la pièce que l'on souhaite chauffer. La puissance utile $Q_u$ de la machine est alors la puissance thermique $Q_{ac} = Q_{ac}^1 + Q_{ac}^2$ de l'ensemble absorbeur/condenseur.

L'absorbeur **14,** la pompe **16,** le générateur **18** et le détendeur **20** mettent en œuvre conjointement un cycle dit « moteur », qui modifie le fluide frigorigène afin de la placer dans son état nécessaire au cycle frigorigène. La puissance consommée $Q_{conso}$ pour le cycle moteur est donc le total de la puissance électrique $W$ consommée par la pompe **16** et la puissance thermique $Q_g$ consommée par le générateur **18.** Les machines à absorption étant par nature conçues pour que $W \ll Q_g$, la puissance consommée est donc sensiblement égale à $Q_g$. Le coefficient $COP_{th} = \dfrac{\tilde{Q}_{conso}}{Q_u}$ de performance thermique de la machine à absorption est ainsi sensiblement égal à $\dfrac{Q_g}{Q_u}$.

Selon l'invention, la température $T_g$ du générateur **18** et la vitesse de rotation $N_{pompe}$ de la pompe **16,** et donc la pression de la solution en sortie de la pompe **16,** sont pilotables. La commande de la température $T_g$ est classique. Par exemple, le générateur **18** est parcouru par une canalisation en serpentin dans laquelle circule de l'eau chaude, cette canalisation appartenant à un circuit secondaire **26** couplé par exemple à une énergie renouvelable (solaire, biomasse, géothermie...) pour chauffer l'eau. Ce circuit secondaire **26,** qui fait partie de la machine à absorption, comporte une vanne trois voies de recirculation qui permet de réinjecter une partie de l'eau sortant du générateur vers l'entrée, permettant ainsi d'en abaisser la température. Cette vanne est par exemple pilotable en fonction d'une température demandée $T_g^d$ pour le générateur **18.** Bien entendu tout type de dispositif piloté réglant la température du générateur **18** convient.

La pompe à solution **16** est entraînée par un moteur électrique alimenté par un variateur de fréquence, ce qui permet de piloter sa vitesse de rotation $N_{pompe}^d$. Ce type de pompe est classique et ne sera donc pas décrit plus en détail.

Toujours selon l'invention, trois capteurs de température **28, 30, 32,** par exemple des thermocouples, sont prévus pour mesurer respectivement la température $T_e$ de la source froide, c'est à dire du fluide entrant dans l'évaporateur **12,** la température $T_{ac}$ de la source intermédiaire, c'est à dire du fluide entrant dans l'absorbeur **14** et le condenseur **22,** et la température $T_g$ de la source chaude, c'est à dire du fluide entrant dans le générateur **18.** Les thermocouples sont par exemple insérés dans les tuyaux respectifs de l'évaporateur, du condenseur ou du générateur, ou en variante collés sur la paroi de ces tuyaux. En variante, ces thermocouples sont localisés dans le flux d'air, si la machine fonctionne en air.

En se référant à la figure 2, un circuit de commande **40** de la machine à absorption venant d'être décrite est à présent détaillé. Sur cette figure, la machine à absorption est représentée par le bloc **42** qui regroupe les éléments **12** à **26** décrits précédemment. Le circuit de commande **40** comporte les capteurs **28, 30, 32** délivrant les mesures $T_e^m$, $T_{ac}^m$ et $T_g^m$ des températures $T_e$, $T_{ac}$ et $T_g$ respectivement et un contrôleur **44.**

Le contrôleur **44** reçoit les mesures $T_e^m$, $T_{ac}^m$ et $T_g^m$, ainsi qu'une demande de puissance utile $Q_u^d$ de la part de l'utilisateur de la machine à absorption et, le cas échéant, numérise ces entrées au moyen d'un convertisseur analogique/numérique (CAN) si celles-ci sont sous forme analogique. Le contrôleur **44** calcule alors les signaux de commande $T_g^d$ et $N_{pompe}^d$ du générateur **18** et de la pompe rotative **16** en fonction des entrées reçues et délivre ces signaux, le cas échéant après leur conversion sous forme analogique au moyen d'un convertisseur numérique/analogique (CNA), au générateur **18** et à la pompe **16.**

Plus particulièrement, le contrôleur **44** comporte une unité de calcul **46** qui :

- mémorise un modèle $f_{abso}$ de la machine à absorption prédisant le coefficient $COP_{th}$ et la puissance utile $Q_u$ en fonction des températures $T_e$, $T_{ac}$ et $T_g$ et de la vitesse de rotation $N_{pompe}$ lorsque la machine à absorption est en régime permanent, à savoir un modèle selon la relation

$$(COP_{th}, Q_u) = f_{abso}\left(T_e, T_{ac}, T_g, N_{pompe}\right)$$

- met en œuvre un algorithme de recherche, sur la base du modèle $f_{abso}$ mémorisé, d'une consigne de température $T_g^c$ pour la température $T_g$ du générateur **18** et d'une consigne de vitesse $N_{pompe}^c$ pour la vitesse de rotation $N_{pompe}$ qui satisfassent $Q_u = Q_u^d$ avec un coefficient $COP_{th}$ maximal.

Le contrôleur **44** comporte également un circuit de contrôle **48** appliquant les valeurs calculées $T_g$ et $N_{pompe}^c$ en tant que consignes pour la machine à absorption. Notamment, lorsque la pompe rotative **16** est auto-régulée, la consigne $N_{pompe}^c$ est directement appliquée en tant que signal de commande $N_{pompe}^d$. Dans une variante, le circuit de contrôle **48** comporte un régulateur **50, 52** qui régule la température du générateur $T_g$ sur sa valeur de consigne $T_g^c$. Par exemple, le régulateur **50, 52** comporte un soustracteur **52** formant la différence $T_g^c - T_g^m$ entre la consigne de température $T_g^c$ et la mesure de température $T_g^m$ et un correcteur **52,** par exemple un PID, qui produit le signal de commande $T_g^d$ de manière à annuler la différence $T_g^c - T_g^m$. La régulation mis en œuvre par le régulateur **50, 52** est analogique ou numérique, la fréquence du régulateur dans la variante numérique étant supérieure à la fréquence de mise à jour des consignes $T_g^c$ et $N_{pompe}^c$. La détermination et la mise en œuvre d'une telle loi de régulation est classique et ne sera donc pas détaillée plus en détails.

Ainsi, en régime permanent, établi pour les paramètres $\begin{pmatrix} T_e^m \\ T_{ac}^m \\ T_g^c \\ N_{pompe}^c \end{pmatrix}$ définissant le point de fonctionnement $P_F$ de la machine à absorption, la puissance utile de cette dernière s'établit, aux éventuelles erreurs de modélisation près, sur la puissance demandée $Q_u^d$ tout en garantissant un coefficient $COP_{th}$ optimal. Notamment, une variation du point de fonctionnement $P_F$ implique, pour une puissance utile constante, une dégradation du coefficient $COP_{th}$.

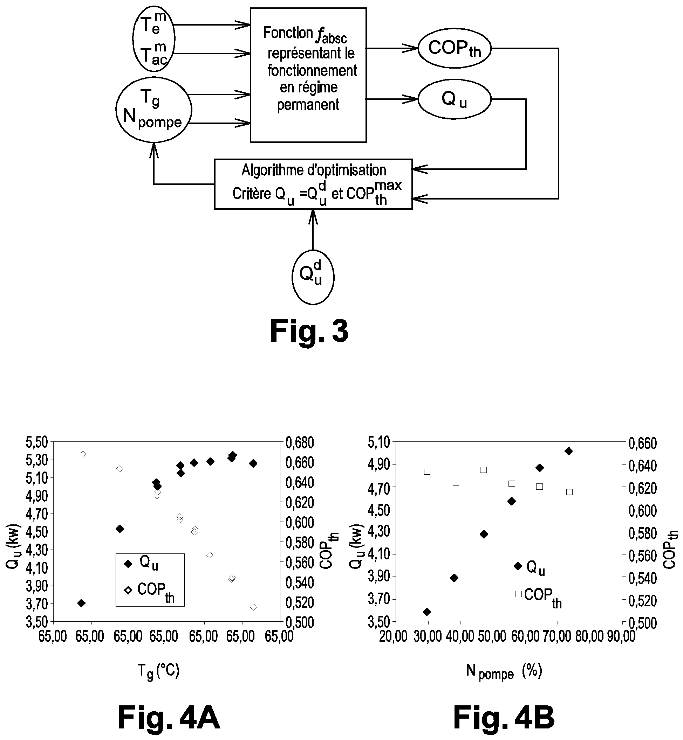

En se référant à la figure 3, l'algorithme de recherche mis en œuvre par l'unité de calcul **44** fonctionne par exemple de la manière suivante. Les températures de la source froide $T_e$ et de la source intermédiaire $T_{ac}$ étant imposées par l'environnement de la machine à absorption, elles sont donc posées respectivement égales aux mesures $T_e^m$ et $T_{ac}^m$. L'algorithme de recherche parcourt alors un intervalle prédéfini $I_g = \left[T_g^{min}, T_g^{max}\right]$ de températures pour le générateur **18,** avec un pas d'échantillonnage $\varDelta T_g$, et parcourt un intervalle prédéfini $I_{pompe} = \left[N_{pompe}^{min}, N_{pompe}^{max}\right]$ de vitesse de rotation de la pompe rotative **16,** avec un pas d'échantillonnage $\varDelta N_{pompe}$. Notamment, la vitesse de la pompe **16** est limitée à une vitesse maximale et la vitesse de rotation de la pompe **16** est exprimée en pourcentage de cette vitesse. L'intervalle $I_{pompe}$ est par exemple égal à [0, 100%] et le pas $\varDelta N_{pompe}$ est par exemple égal à 1% de la vitesse maximale. L'intervalle $I_g$ est quant à lui imposé par les caractéristiques de la machine à absorption et/ou est déterminé en fonction de la température mesurée de la source intermédiaire $T_{ac}^m$. On sait en effet que la température

$T_g$ du générateur **18** doit être supérieure à la température $T_{ac}$ de la source intermédiaire pour que la machine à absorption puisse fonctionner. Ainsi l'intervalle de recherche peut être calculé $I_g$ par l'unité de calcul **46** tel que $T_g^{min} > T_{ac}^m$, le pas $\Delta T_g$ étant par exemple égal à 1°C.

Ayant parcouru l'espace de recherche $I_g \times I_{pompe}$, l'unité de calcul **44** retient alors le couple $\left(T_g^c, N_{pompe}^c\right)$ impliquant une puissance utile prédite par le modèle la plus proche, et de préférence égale, à la puissance utile demandée $Q_u^d$, et impliquant la plus grande valeur $COP_{th}^{max}$ prédite pour le coefficient $COP_{th}$, à savoir le couple vérifiant :

$$\left(COP_{th}^{max}, Q_u^d\right) = f_{abso}\left(T_e^m, T_{ac}^m, T_g^c, N_{pompe}^c\right)$$

En se référant aux figures 4A et 4B, qui sont respectivement des tracées de puissance utile $Q_u$ mesurée et de coefficient de performance thermique $COP_{th}$ mesuré en fonction de la température du générateur $T_g$ et de la vitesse de rotation $N_{pompe}$ de la pompe d'une machine à absorption de test, on note la dépendance des grandeurs $Q_u$ et $COP_{th}$ en fonction des grandeurs $T_g$ et $N_{pompe}$, et notamment le comportement sensiblement régulier, voire même monotone, de la puissance $Q_u$ et du coefficient et du coefficient $COP_{th}$. Ce type de comportement, et donc le modèle $f_{abso}$, est aisément modélisable par des techniques usuelles du domaine de la simulation numérique, par exemple par un réseau de neurones.

Le mode de réalisation venant d'être décrit embarque un algorithme de recherche du couple de consignes $\left(T_g^c, N_{pompe}^c\right)$ optimal en termes de puissance utile et de coefficient de performance thermique. Afin d'accélérer la détermination de ce couple, en variante l'unité de calcul **44** mémorise en ensemble de triplets $\begin{pmatrix} \hat{T}_e^m \\ \hat{T}_{ac}^m \\ \hat{Q}_u^d \end{pmatrix}$, chacun associé à un couple $\begin{pmatrix} T_g^c \\ N_{pompe}^c \end{pmatrix}$, tels que la relation $\left(COP_{th}^{max}, \hat{Q}_u^d\right) = f_{abso}\left(\hat{T}_e^m, \hat{T}_{ac}^m, T_g^c, N_{pompe}^c\right)$ est vérifiée pour une valeur de coefficient $COP_{th}$ maximale. Ces triplets et couples sont déterminés par exemple en usine et l'unité de calcul **44** choisit parmi les couples mémorisés $\begin{pmatrix} T_g^c \\ N_{pompe}^c \end{pmatrix}$ celui qui correspond au triplet $\begin{pmatrix} \hat{T}_e^m \\ \hat{T}_{ac}^m \\ \hat{Q}_u^d \end{pmatrix} = \begin{pmatrix} T_e^m \\ T_{ac}^m \\ Q_u^d \end{pmatrix}$. Ceci permet notamment d'utiliser des modèles de prédiction plus élaboré. Par contre, cela nécessite une unité de commande pourvue d'une grande mémoire informatique pour mémoriser suffisamment de couples et de triplets afin d'obtenir un maillage suffisamment précis de la température du générateur et de la vitesse de rotation de la pompe.

Dans une première variante, l'unité **44** calcule le couple de consigne $\left(T_g^c, N_{pompe}^c\right)$ à chaque démarrage de la machine à absorption et à chaque modification de la puissance utile demandée. Selon une seconde variante, l'unité **44** de calcul met également en œuvre un test de mise à jour du couple de consignes $\left(T_g^c, N_{pompe}^c\right)$. Notamment, l'unité **44** mémorise les valeurs des mesures $T_e^m$, $T_{ac}^m$ et de la puissance $Q_u^d$ ayant servi au dernier calcul du couple de consignes $\left(T_g^c, N_{pompe}^c\right)$, notées $T_e^m(k)$, $T_{ac}^m(k)$ et $Q_u^d(k)$, et surveille les mesures de températures $T_e^m$, $T_{ac}^m$ et de la puissance utile demandée $Q_u^d$ reçues en entrée. L'unité **44** teste notamment si le triplet d'entrée $\begin{pmatrix} T_e^m \\ T_{ac}^m \\ Q_u^d \end{pmatrix}$ s'écarte, au sens d'un critère prédéterminé, par exemple la distance euclidienne, du triplet mémorisé $\begin{pmatrix} T_e^m(k) \\ T_{ac}^m(k) \\ Q_u^d(k) \end{pmatrix}$, et

si tel est le cas met en œuvre un nouveau calcul des consignes $\left(T_g^c, N_{pompe}^c\right)$. Selon une troisième variante, l'unité **44** met à jour régulièrement ces consignes, par exemple toutes les 10 minutes.

Le contrôleur **44** comporte, outre d'éventuels CAN et CNA pour la conversion des entrées et des sorties, peut prendre n'importe quelle forme matérielle dès lors qu'il comporte des moyens de calcul (e.g. microprocesseur, microcontrôleur, etc) et de mémorisation (RAM, ROM, etc) adaptés pour la mise en œuvre d'un calcul informatique.

Le contrôleur **44** peut également comporter une portion numérique, par exemple l'unité de calcul **46** et une portion analogique, par exemple le régulateur **50, 52**.

Il a été décrit un mode de réalisation dans lequel la valeur maximale du coefficient de performance thermique est recherchée. En variante, l'utilisateur peut choisir une valeur inférieure à celle-ci s'il le désire. La procédure décrite ci-dessus reste alors valable.

De même, il a été décrit une modélisation en régime permanent. Bien entendu, l'invention s'applique également en régime transitoire, la fonction $f_{abso}$ ou les cartographies étant choisies dans ce sens.

De même il a été décrit le contrôle du coefficient de performance thermique $COP_{th}$. En variante, un autre critère de performance énergétique peut être choisi, par exemple l'inverse du coefficient $COP_{th}$, un coefficient composé du $COP_{th}$ et d'une autre puissance, le rendement énergétique, le rapport $COP_{th}$ / $COP_{carnot}$, etc

De même, il a été décrit le contrôle de la puissance utile $Q_u^d$ de la machine à absorption. Au sens de l'invention, le contrôle directe de la puissance utile tel que décrit précédemment est équivalent au contrôle d'une grandeur liée à la puissance utile et permettant le contrôle indirecte de la puissance utile. Par exemple, la puissance utile se modélise selon la relation :

$$Q_u = m \times C_p \times (T_u^s - T_u^e)$$

expression dans laquelle m est le débit dans l'échangeur considéré (évaporateur si la machine fonctionne en tant qu'unité de réfrigération, ensemble absorbeur/condenseur si la machine fonctionne en tant que chauffage), $C_p$ est la capacité calorifique du fluide, $T_u^s$ et $T_u^e$ sont respectivement les températures du fluide en sortie et en entrée de l'échangeur considéré. La température $T_u^e$ étant par exemple imposée par l'environnement, le contrôle de la température de sortie $T_u^s$ permet donc le contrôle de la puissance utile $Q_u$.

## Revendications

1. Système comprenant une machine à absorption (10) et un circuit de commande (40) couplé à la machine à absorption (10) pour réguler la puissance utile $Q_u$ de celle-ci sur une puissance utile demandée $Q_u^d$ prédéterminée, la machine à absorption (10) comportant :

    - un évaporateur (12), de température $T_e$ et apte à échanger une puissance thermique $Q_e$ avec son environnement ;
    - un ensemble absorbeur/condenseur (14, 22) formé d'un absorbeur (14) et d'un condenseur (22), de température $T_{ac}$ et apte à échanger une puissance thermique $Q_{ac}$ avec son environnement ;
    - un générateur (18), de température $T_g$ et apte à échanger une puissance thermique $Q_g$, la puissance thermique $Q_g$ étant pilotable par la température $T_g$; et
    - une pompe rotative à solution (16), disposée entre l'absorbeur (14) et le générateur (18) et dont la vitesse de rotation $N_{pompe}$ est pilotable, et le circuit de commande (40) comportant
    - un capteur (28) apte à produire une mesure $T_e^m$ de la température $T_e$ de l'évaporateur (12) et un capteur (30) apte à produire une mesure $T_{ac}^m$ de la température $T_{ac}$ de l'ensemble absorbeur/condenseur (14, 22); et
    - un circuit de contrôle (48),

    **caractérisé en ce que** le circuit de commande (40) comporte en plus:

    - une unité de calcul (46) configurée pour calculer une consigne $T_g^c$ pour la température $T_g$ du générateur (18) et une consigne $N_{pompe}^c$ pour la vitesse de rotation $N_{pompe}$ de la pompe rotative à solution (16) en fonction de puissance utile demandée $Q_u^d$, et des mesures de température $T_e^m$ et $T_{ac}^m$ de manière à satisfaire la relation :

$$(COP_{th}^{max}, Q_u^d) = f_{abso}(T_e^m, T_{ac}^m, T_g^c, N_{pompe}^c)$$

expression dans laquelle $COP_{th}^{max}$ est une valeur souhaitée d'un coefficient de performance $COP_{th}$ mesuré en fonction de la température $T_g$ du générateur (18) et de la vitesse de rotation $N_{pompe}$ de la pompe rotative à solution (16) de la machine à absorption, et $f_{abso}$ est un modèle de la machine à absorption prédisant le coefficient $COP_{th}$ et la puissance utile $Q_u$ en fonction des températures $T_e$, $T_{ac}$ et $T_g$ et de la vitesse de rotation $N_{pompe}$, le modèle étant issu par des techniques de la simulation numérique, et **en ce que** le circuit de contrôle (48) est configuré pour appliquer la consigne de vitesse $N_{pompe}^c$ à la pompe rotative à solution (16) et pour appliquer la consigne de température $T_g^c$ au générateur (18).

2. Système selon la revendication 1, ***caractérisé* en ce que** l'unité de calcul (46) comporte :

- une mémoire mémorisant le modèle $f_{abso}$ selon la relation :

$$(COP_{th}, Q_u) = f_{abso}(T_e, T_{ac}, T_g, N_{pompe})$$

- et un circuit de calcul configuré pour rechercher les consignes de valeurs $T_g^c$ et $N_{pompe}^c$ en posant dans le modèle $T_e = T_e^m$ et $T_{ac} = T_{ac}^m$ et en faisant varier les variables du modèle $T_g$ et $N_{pompe}$ jusqu'à obtenir le couple de sorties du modèle $(COP_{th}, Q_u) = (COP_{th}^{max}, Q_u^d)$.

3. Système selon la revendication 1, ***caractérisé* en ce que** l'unité de calcul (46) comporte :

- une mémoire mémorisant des couples $\begin{pmatrix} T_g^c \\ N_{pompe}^c \end{pmatrix}$ de consignes $T_g^c$ de température pour le générateur et de consigne $N_{pompe}^c$ de vitesse de rotation pour la pompe rotative à solution en fonction de triplets $\begin{pmatrix} T_e \\ T_{ac} \\ Q_u \end{pmatrix}$ de température de l'évaporateur $T_e$, de température de l'ensemble absorbeur/condenseur $T_{ac}$ et de puissance utile $Q_u$; et

- un circuit de calcul configuré pour sélectionner un couple de consigne $\begin{pmatrix} T_g^c \\ N_{pompe}^c \end{pmatrix}$ parmi les couples de consignes mémorisés en fonction du triplet $\begin{pmatrix} T_e^m \\ T_{ac}^m \\ Q_u^d \end{pmatrix}$.

4. Système selon la revendication 1, 2 ou 3, ***caractérisé* en ce que** le circuit de commande (40) comporte un capteur (32) apte à produire une mesure $T_g^m$ de la température $T_g$ du générateur (18), et **en ce que** le circuit de contrôle (48) comporte un régulateur (50, 52) configuré pour commander la température $T_g$ du générateur (18) de manière à réguler la mesure de température $T_g^m$ sur la consigne de température $T_g^c$.

5. Système comprenant une machine à absorption (10) et un circuit de commande (40) couplé à la machine à absorption pour réguler la puissance utile $Q_u$ de celle-ci sur une puissance utile demandée $Q_u^d$ prédéterminée, la machine à absorption (10) comportant :

- un évaporateur (12), de température $T_e$ et apte à échanger une puissance thermique $Q_e$ avec son environnement ;
- un ensemble absorbeur/condenseur (14, 22) formé d'un absorbeur (14) et d'un condenseur (22), de température $T_{ac}$ et apte à échanger une puissance thermique $Q_{ac}$ avec son environnement ;
- un générateur (18), de température $T_g$ et apte à échanger une puissance thermique $Q_g$, la puissance thermique $Q_g$ étant pilotable par la température $T_g$; et
- une pompe rotative à solution (16), disposée entre l'absorbeur et le générateur et dont la vitesse de rotation $N_{pompe}$ est pilotable, et le circuit de commande (40) comporte :
    - un capteur (28) apte à produire une mesure $T_e^m$ de la température $T_e$ de l'évaporateur et un capteur (30) apte à produire une mesure $T_{ac}^m$ de la température $T_{ac}$ de l'ensemble absorbeur/condenseur (14, 22); et
    - un circuit de contrôle (48),

**caractérisé en ce que** le circuit de commande (40) comporte en plus:
    - une unité de calcul (46) configurée pour calculer une consigne $T_g^c$ pour la température $T_g$ du générateur (18) et une consigne $N_{pompe}^c$ pour la vitesse de rotation $N_{pompe}$ de la pompe rotative à solution (16) en fonction de puissance utile demandée $Q_u^d$, et des mesures de température $T_e^m$ et $T_{ac}^m$
    - **en ce que** le circuit de contrôle (48) est configuré pour appliquer la consigne de vitesse $N_{pompe}^c$ à la pompe rotative à solution et pour appliquer la consigne de température $T_g^c$ au générateur,

**et ce que** le calcul mis en œuvre par l'unité de calcul (46) est sélectionné de manière à ce que :
    - l'application des consignes $N_{pompe}^c$ et $T_g^c$ pour une température $T_e = T_e^m$ et une température $T_{ac} = T_{ac}^m$ conduit, en régime permanent, à une puissance utile $Q_u$ de la machine à absorption égale à la puissance utile demandée $Q_u^d$ et à une valeur $COP_{th}^{max}$ du coefficient de performance thermique $COP_{th}$ de la machine à absorption; et

    - à partir du régime permanent établi pour une valeur $\begin{pmatrix} T_e^m \\ T_{ac}^m \\ T_g^c \\ N_{pompe}^c \end{pmatrix}$ du vecteur $P_F = \begin{pmatrix} T_e \\ T_{ac} \\ T_g \\ N_{pompe} \end{pmatrix}$, une variation vecteur $P_F$ entraine, une fois un régime permanent atteint et pour une puissance utile $Q_u$ gardée constante et égale à $Q_u^d$, une valeur du coefficient de performance thermique $COP_{th}$ de la machine à absorption inférieur ou égal à la valeur $COP_{th}^{max}$.

**Patentansprüche**

1. Ein System mit einer Absorptionsmaschine (10) und einer mit der Absorptionsmaschine (10) verbundenen Steuerschaltung (40), um deren Nutzleistung $\boldsymbol{Q_u}$ auf eine vorbestimmte, angeforderte Nutzleistung $\boldsymbol{Q_u^d}$ zu regeln, diese Absorptionsmaschine (10) enthält:

    - einen Verdampfer (12) mit einer Temperatur $\boldsymbol{T_e}$, der in der Lage ist, eine Wärmeleistung $\boldsymbol{Q_e}$ mit der Umgebung auszutauschen;
    - eine Absorber-/ Kondensator-Anordnung (14, 22) bestehend aus einem Absorber (14) und einem Kondensator (22), mit einer Temperatur $\boldsymbol{T_{ac}}$, die in der Lage ist, eine Wärmeleistung $\boldsymbol{Q_{ac}}$ mit der Umgebung auszutauschen;

- einen Generator (18), mit einer Temperatur $T_g$ der in der Lage ist, eine Wärmeleistung $Q_g$ auszutauschen, die Wärmeleistung $Q_g$ ist dabei über die Temperatur $T_g$ steuerbar; und

- eine Lösungs- Rotationspumpe (16), angeordnet zwischen dem Absorber (14) und dem Generator (18) deren Drehgeschwindigkeit $N_{pompe}$ steuerbar ist, und die Steuerschaltung (40) enthält:

- einen Sensor (28) der in der Lage ist, eine Messung $T_e^m$ der Temperatur $T_e$ des Verdampfers (12) zu erzeugen, und einen Sensor (30), der in der Lage ist, eine Messung $T_{ac}^m$ der Temperatur $T_{ac}$ der Absorber-/ Kondensator- Anordnung (14, 22) zu erzeugen; sowie

- einen Regelkreis (48),

**dadurch gekennzeichnet, dass** die Steuerschaltung (40) außerdem enthält:

- eine Recheneinheit (46) konfiguriert zur Berechnung eines Sollwertes $T_g^c$ für die Temperatur $T_g$ des Generators (18) und eines Sollwertes $N_{pompe}^c$ für die Drehzahl $N_{pompe}$ der Lösungs- Rotationspumpe (16) in Abhängigkeit von der angeforderten Nutzleistung $Q_u^d$, und der Temperaturmessungen $T_e^m$ und $T_{ac}^m$, so dass die folgende Gleichung erfüllt wird:

$$\left(COP_{th}^{max}, Q_u^d\right) = f_{abso}(T_e^m, T_{ac}^m, T_g^c, N_{pompe}^c)$$

in dieser Gleichung ist $COP_{th}^{max}*$ der gewünschte Wert eines Leistungskoeffizienten $COP_{th}$, gemessen in Abhängigkeit von der Temperatur $T_g$ des Generators (18) und der Drehzahl $N_{pompe}$ der Lösungs- Rotationspumpe (16) der Absorptionsmaschine, und $f_{abso}$ ist ein Modell der Absorptionsmaschine, das den Koeffizienten $COP_{th}$ und die Nutzleistung $Q_u$ in Abhängigkeit von den Temperaturen $T_e$, $T_{ac}$ und $T_g$ und der Drehzahl $N_{pompe}$ voraussagt, das Modell wird durch digitale Simulationstechniken erstellt, und dadurch dass der Regelkreis (48) dazu konfiguriert ist, den Drehzahlsollwert $N_{pompe}^c$ auf die Lösungs- Rotationspumpe (16) anzulegen und um den Temperatursollwert $T_g^c$ auf den Generator (18) anzulegen.

2. System nach Anspruch 1, **dadurch gekennzeichnet, dass** die Recheneinheit (46) enthält:

- einen Speicher, der das Modell $f_{abso}$ nach der Gleichung:

$$\left(COP_{TH}, Q_U\right) = f_{abso}\left(T_e, T_{ac}, T_g, N_{pompe}\right)$$

speichert,

- sowie einen Rechenschaltkreis, konfiguriert zur Ermittlung der Sollwerte der Werte $T_g^c$ und $N_{pompe}^c$ durch Einsetzen von $T_e = T_e^m$ $T_e$ und $T_{ac}^m$ im Modell und durch Variation der Variablen des Modells $T_g$, und $N_{pompe}$ bis zum Erreichen des Ausgangsmomentes des Modells $\left(COP_{TH}, Q_U\right) = \left(COP_{th}^{max}, Q_u^d\right)$

3. System nach Anspruch 1, **dadurch gekennzeichnet, dass** die Recheneinheit (46) enthält:

- einen Speicher, der die Momente $\begin{bmatrix} T_g^c \\ N_{pompe}^c \end{bmatrix}$ des Sollwertes $T_g^c$ der Temperatur für den Generator und des Sollwertes $N_{pompe}^c$ der Drehzahl für die Lösungs-Rotationspumpe in Abhängigkeit von den Tripeln $\begin{bmatrix} T_e \\ T_{ac} \\ Q_u \end{bmatrix}$

der Temperatur des Verdampfers $T_e$, der Temperatur der Absorber-/ Kondensator- Anordnung $T_{ac}$ und der Nutzleistung $Q_u$; und

- ein Rechenschaltkreis konfiguriert zur Auswahl eines Sollwertmomentes $\begin{bmatrix} T_g^c \\ N_{pompe}^c \end{bmatrix}$ aus den gespeicherten

Sollwertmomenten, in Abhängigkeit vom Tripel $\begin{bmatrix} T_m^e \\ T_{ac}^m \\ Q_u^d \end{bmatrix}$.

4. System nach Anspruch 1, 2 oder 3, **dadurch gekennzeichnet, dass** die Steuerschaltung (40) einen Sensor (32) enthält, der in der Lage ist, eine Messung $T_g^{\,m}$ der Temperatur $T_g$ des Generators (18) zu erzeugen, und dadurch, dass der Regelkreis (48) einen Regler (50, 52) enthält, konfiguriert zur Steuerung der Temperatur $T_g$ des Generators (18), so dass die Temperaturmessung $T_g^{\,m}$ anhand des Sollwertes der Temperatur $T_g^c$. geregelt werden kann.

5. System mit einer Absorptionsmaschine (10) und einer Steuerschaltung (40), die an die Absorptionsmaschine gekoppelt ist, um deren Nutzleistung $Q_u$ entsprechend einer vorher festgelegten, angeforderten Nutzleistung zu regeln, die Absorptionsmaschine (10) enthält:

- einen Verdampfer (12), mit der Temperatur $T_e$ und in der Lage, eine Wärmeleistung $Q_e$ mit der Umgebung auszutauschen;
- eine Absorber-/ Kondensator- Anordnung (14, 22), bestehend aus einem Absorber (14) und einem Kondensator (22) mit der Temperatur $T_{ac}$ und der in der Lage ist, eine Wärmeleistung Qac mit der Umgebung auszutauschen;
- einen Generator (18), mit der Temperatur $T_g$ und der in der Lage ist, eine Wärmeleistung $Q_g$, auszutauschen, die Wärmeleistung Q kann dabei über die Temperatur $T_g$; gesteuert werden, und
- eine Lösungs- Rotationspumpe (16), angeordnet zwischen dem Absorber und dem Generator deren Drehzahl $N_{pompe}$ steuerbar ist, und

die Steuerschaltung (40) enthält:

- einen Sensor (28) der in der Lage ist, eine Messung $T_e^m$ der Temperatur $T_e$ des Verdampfers zu erzeugen, und einen Sensor (30), der in der Lage ist, eine Messung $T_{ac}^m$ der Temperatur $T_{ac}$ der Absorber-/ Kondensator- Anordnung (14, 22) zu erzeugen; und
- einen Regelkreis (48),

**dadurch gekennzeichnet, dass** die Steuerschaltung (40) außerdem enthält:

- eine Recheneinheit (46) konfiguriert zur Berechnung eines Sollwertes $T_g$ für die Temperatur $T_g$ des Generators (18) und eines Sollwertes $N_{pompe}^c$ für die Drehzahl $N_{pompe}$ der Lösungs- Rotationspumpe (16) in Abhängigkeit von der angeforderten Nutzleistung $Q_u^d$, und der Temperaturmessungen $T_e^m$ und $T_{ac}^m$
- dadurch, dass der Regelkreis (48) dazu konfiguriert ist, den Geschwindigkeitssollwert $N_{pompe}^c$ auf die Lösungs- Rotationspumpe anzulegen und den Temperatursollwert $T_g^c$ am Generator anzulegen,

**und dadurch, dass** die von der Recheneinheit (46) umgesetzte Berechnung so ausgewählt wird, dass:
- das Anlegen der Sollwerte $N_{pompe}^c$ und $T_g^c$ für eine Temperatur $T_e = T_e^m$ $T_e$ und eine Temperatur $T_{ac} = T_{ac}^m$ im Dauerbetrieb zu einer Nutzleistung $Q_u$ der Absorptionsmaschine gleich der angeforderten Nutzleistung $Q_u^d$ führt und zu einem Wert $COP_{th}^{max}$ des Wärme- Leistungskoeffizienten $COP_{th}$ der Absorp-

tionsmaschine; und

- ausgehend vom Dauerbetrieb, festgelegt für einen Wert $\begin{bmatrix} T_e^m \\ T_{ac}^m \\ T_g^c \\ N_{pompe}^c \end{bmatrix}$ des Vektors $P_F = \begin{bmatrix} T_e \\ T_{ac} \\ T_g \\ N_{pompe} \end{bmatrix}$,

führt eine $P_F$- Vektor - Variation, sobald ein Dauerbetrieb erreicht wurde und für eine Nutzleistung $Q_u$, die konstant und gleich $Q_u^d$, gehalten wurde, zu einem Wert des Wärme- Leistungskoeffizienten $COP_{th}$ der Absorptionsmaschine kleiner oder gleich dem Wert $COP_{th}^{max}$.

## Claims

1. A system comprising an absorption machine (10) and a control circuit (40) coupled to the absorption machine (10) to adjust the power output $Q_u$ thereof according to a predetermined required power output $Q_u^d$, the absorption machine (10) comprising:

   - an evaporator (12), of temperature $T_g$ and capable of exchanging a thermal power $Q_g$ with its environment;
   - an absorption/condenser assembly (14, 22) formed of an absorber (14) and of a condenser (22), of temperature $T_{ac}$ and capable of exchanging a thermal power $Q_{ac}$ with its environment;
   - a generator (18), of temperature $T_g$ and capable of exchanging a thermal power $Q_g$, thermal power $Q_g$ being controllable with temperature $T_g$; and
   - a rotary solution pump (16), arranged between the absorber (14) and the generator (18) and having a controllable rotation speed $N_{pump}$;

   and the control circuit (40) comprising:

   - a sensor (28) capable of providing a measurement $T_e^m$ of temperature $T_g$ of the evaporator (12) and a sensor (30) capable of providing a measurement $T_{ac}^m$ of temperature $T_{ac}$ of the absorber/condenser assembly (14, 22); and
   - and an adjustment circuit (48) ;

   **characterized** in that the control circuit (40) further comprises a calculation unit (46) capable of calculating a set point value $T_g^c$ for temperature $T_g$ of the generator (18) and a set point value $N_{pump}^c$ for rotation speed $N_{pump}$ of the rotary solution pump (16) according to the required power output $Q_u^d$, and to temperature measurements $T_e^m$ and $T_{ac}^m$ to satisfy relation:

   $$(COP_{th}^{max}, Q_u^d) = f_{abso}(T_e^m, T_{ac}^m, T_g^c, N_{pump}^c)$$

   in which expression $COP_{th}^{max}$ is a desired value of a coefficient of performance $COP_{th}$ of the absorption machine, and $f_{abso}$ is a model of the absorption machine predicting coefficient $COP_{th}$ and power output $Q_u$ according to temperatures $T_g$, $T_{ac}$, and $T_g$ and to rotation speed $N_{pump}$, said model resulting from digital simulation,

   and **in that** the adjustment circuit (48) is configured to apply the speed set point value $N_{pump}^c$ to the rotary solution pump (16) and to apply the temperature set point value $T_g^c$ to the generator (18).

2. The system of claim 1, **characterized** in that the calculation unit (46) comprises:

   - a memory storing model $f_{abso}$ according to relation:

$$(COP_{th}, Q_u) = f_{abso}(T_e, T_{ac}, T_g, N_{pump})$$

- and a calculation circuit configured to seek set point values $T_g^c$ and $N_{pump}^c$ by setting in the model $T_e = T_e^m$ and $T_{ac} = T_{ac}^m$ and by varying the variables of the model $T_g$ and $N_{pump}$ to obtain the pair of outputs of the model $(COP_{th}, Q_u) = (COP_{th}^{max}, Q_u^d)$.

3. The system of claim 1, *characterized* in that the calculation unit (46) comprises:

- a memory storing pairs $\begin{pmatrix} T_g^c \\ N_{pump}^c \end{pmatrix}$ of temperature set point values $T_g^c$ for the generator and of rotation speed set point values $N_{pump}^c$ for the rotary solution pumps according to triplets $\begin{pmatrix} T_e \\ T_{ac} \\ Q_u \end{pmatrix}$ of temperature of evaporator $T_g$, of temperature of the absorber/condenser assembly $T_{ac}$, and of power output $Q_u$;

- a calculation circuit configured to select a pair of set point values $\begin{pmatrix} T_g^c \\ N_{pump}^c \end{pmatrix}$ from among the stored pairs of set point values according to triplet $\begin{pmatrix} T_e^m \\ T_{ac}^m \\ Q_u^d \end{pmatrix}$.

4. The system of claim 1, 2, or 3, *characterized* in that the control circuit (40) comprises a sensor (32) capable of providing a measurement $T_g^m$ of the temperature $T_g$ of the generator (18), and wherein the adjustment circuit (48) comprises a regulator (50, 52) configured to control temperature $T_g$ of the generator (18) to adjust temperature measurement $T_g^m$ according to temperature set point value $T_g^c$.

5. A system comprising an absorption machine (10) and a control circuit (40) coupled to the absorption machine to adjust the power output $Q_u$ thereof according to a predetermined required power output $Q_u^d$, the absorption machine (10) comprising:

- an evaporator (12), of temperature $T_g$ and capable of exchanging a thermal power $Q_g$ with its environment;
- an absorption/condenser assembly (14, 22) formed of an absorber (14) and of a condenser (22), of temperature $T_{ac}$ and capable of exchanging a thermal power $Q_{ac}$ with its environment;
- a generator (18), of temperature $T_g$ and capable of exchanging a thermal power $Q_g$, thermal power $Q_g$ being controllable with temperature $T_g$; and
- a rotary solution pump (16), arranged between the absorber and the generator and having a controllable rotation speed $N_{pump}$;

and the control circuit (40) comprising:

- a sensor (28) capable of providing a measurement $T_e^m$ of temperature $T_g$ of the evaporator and a sensor (30) capable of providing a measurement $T_{ac}^m$ of temperature $T_{ac}$ of the absorber/condenser assembly (14, 22);
- and adjustment circuit (48);

*characterized in that* the control circuit (40) further comprises a calculation unit (46) capable of calculating a set point value $T_g^c$ for temperature $T_g$ of the generator (18) and a set point value $N_{pump}^c$ for rotation speed $N_{pump}$ of the rotary solution pump (16) according to the required power output $Q_u^d$, and to temperature measurements $T_e^m$

and $T_{ac}^m$, **in that** the adjustment circuit (48) is configured to apply the speed set point value $N_{pump}^c$ to the rotary solution pump and to apply the temperature set point value $T_g^c$ to the generator,

**and in that** the calculation implemented by the calculation unit (46) is selected so that:

- the application of set point values $N_{pump}^c$ and $T_g^c$ for a temperature $T_e = T_e^m$ and a temperature $T_{ac} = T_{ac}^m$ results, in steady state, in a power output $Q_u$ of the absorption machine equal to the required power output $Q_u^d$ and in a value $COP_{th}^{max}$ of the thermal coefficient of performance $COP_{th}$ of the absorption machine; and

- from the steady state established for a value $\begin{pmatrix} T_e^m \\ T_{ac}^m \\ T_g^c \\ N_{pump}^c \end{pmatrix}$ of vector $P_F = \begin{pmatrix} T_e \\ T_{ac} \\ T_g \\ N_{pump} \end{pmatrix}$, a vector variation

$P_F$ causes, once a steady state has been reached and for a power output $Q_u$ kept constant and equal to $Q_u^d$, a value of the thermal coefficient of performance $COP_{th}$ of the absorption machine smaller than or equal to $COP_{th}^{max}$.

10

Cycle frigorigène:   Cycle moteur:

Condensateur ($T_{ac}$)                                    Générateur ($T_g$)                    26

$Q_{ac}^2$ ←

$T_{ac}^m$ ←                                                                                    ← $Q_g$                    $T_g^d$ ←

30    22    18

Sous-refroidisseur                                                              32    → $T_g^m$

24                                                          20                    Economiseur                N$_{pompe}^d$

Pompe
à solution    (W)

16

$Q_e$ →                                            $Q_{ac}^1$ ←

$T_e^m$ ←                                            14

28    12    Evaporateur($T_e$)                    Absorbeur ($T_{ac}$)

← NH$_3$ pur │ NH$_3$ + H$_2$O →

**Fig. 1**

40    44    $Q_u^d$

$T_g^c$    46    $T_e^m$

$N_{pompe}^c$    48    $T_{ac}^m$    28

50    52    $N_{pompe}^d$    $T_e$    30

$+$
$-$    $T_g^d$    $T_{ac}$    32

$T_g$

42(12,14,16,18,29,22,24,26)

**Fig. 2**

**Fig. 3**

**Fig. 4A**

**Fig. 4B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 8203265 A1

**Littérature non-brevet citée dans la description**

- **J. FERNANDEZ SEARA et al.** Study and control of the optimal génération temperature in NH3-H2O absorption réfrigération systems. *Applied Thermal Engineering,* 2001, vol. 21, 343-357

- **J. LABUS et al.** Inverse neural network based control strategy for absorption chillers. *Renewable Energy,* 2012, 471-482